Europäisches Patentamt

European Patent Office

Office européen des brevets

(11) Veröffentlichungsnummer: **0 180 918**
**A1**

## (12) EUROPÄISCHE PATENTANMELDUNG

(21) Anmeldenummer: 85113852.9

(22) Anmeldetag: 31.10.85

(51) Int. Cl.⁴: **F 02 M 23/08**
F 02 M 25/06, F 02 M 23/00

(30) Priorität: 02.11.84 DE 3440050

(43) Veröffentlichungstag der Anmeldung:
14.05.86 Patentblatt 86/20

(84) Benannte Vertragsstaaten:
AT BE CH FR GB IT LI LU NL SE

(71) Anmelder: Pommer, Fredi
Bogenstrasse 1
D-5630 Remscheid(DE)

(71) Anmelder: Blume, Axel Jens
Kardinal-Schulte-Strasse 14
D-5060 Bergisch Gladbach(DE)

(72) Erfinder: Pommer, Fredi
Bogenstrasse 1
D-5630 Remscheid(DE)

(72) Erfinder: Blume, Axel Jens
Kardinal-Schulte-Strasse 14
D-5060 Bergisch Gladbach(DE)

(74) Vertreter: Dipl.-Ing. H. Hauck Dipl.-Phys. W. Schmitz
Dipl.-Ing. E. Graalfs Dipl.-Ing. W. Wehnert Dr.-Ing. W.
Döring
Kaiser-Wilhelm-Ring 41
D-4000 Düsseldorf 11(DE)

(54) **Kraftstoffsparvorrichtung.**

(57) Es wird eine Vorrichtung zur Reduzierung des Kraftstoffverbrauchs und zur Herabsetzung der Abgasschadstoffe bei
einer mit einer Einspritzvorrichtung versehenen Brennkraftmaschine beschrieben. Die vorrichtung umfaßt eine in der
Luftansaugleitung der Brennkraftmaschine stromab der
Drosselklappe angeordnete Mischrohrdüse zur Einführung
von Zusatzluft, einen von stromauf der Drosselklappe herrschenden Unterdruck gesteuerten Regler für die Zusatzluftzufuhr und eine mit dem Kurbelgehäuse in Verbindung
stehende, über den Regler in die Mischrohrdüse führende
Zusatzluftzuführleitung. Durch Einführung von Zusatzluft
über die Mischrohrdüse in die Luftansaugleitung wird eine
Verwirbelung des Hauptluftstromes und eine Vermischung
desselben mit aus dem Kurbelgehäuse stammenden
Öldämpfen erreicht, wodurch eine vollkommenere Verbrennung erzielt wird.

FIG.1

## Kraftstoffsparvorrichtung

Die vorliegende Erfindung betrifft eine Vorrichtung zur Reduzierung des Kraftstoffverbrauchs und zur Herabsetzung der Abgasschadstoffe bei mit Einspritzvorrichtungen versehenen Brennkraftmaschinen.

In den beiden deutschen Patentanmeldungen P 33 43 791.1 und P 34 23 603.1 ist bereits ein sogenanntes Kraftstoffspargerät vorgeschlagen worden, das für vergaserbetriebene Brennkraftmaschinen geeignet ist. Dieses Gerät umfasst im wesentlichen eine stromab der Drosselklappe des Vergasers im Ansaugkanal angeordnete Mischrohrdüse zur Einführung von Zusatzluft in den Ansaugkanal, einen vom stromauf der Drosselklappe herrschenden Unterdruck gesteuerten Regler für die Zusatzluftzufuhr und eine mit dem Kurbelgehäuse in Verbindung stehende , über den Regler in die Mischrohrdüse führende Zusatzluftzuführleitung. Die vorliegende Erfindung bezweckt die Weiterbildung einer derartigen Vorrichtung, um diese für mit Einspritzvorrichtungen arbeitende Brennkraftmaschinen geeignet zu machen.

Der Erfindung liegt die Aufgabe zugrunde, eine Vorrichtung zur Reduzierung des Kraftstoffverbrauches und zur Herabsetzung der Abgasschadstoffe der angegebenen Art zu schaffen, die für mit Einspritzvorrichtungen versehene Brennkraftmaschinen geeignet und deren speziellen Anforderungen gerecht wird.

Diese Aufgabe wird erfindungemäß durch eine Vorrichtung der eingangs beschriebenen Art gelöst, die durch eine in der Luftansaugleitung der Brennkraftmaschine stromab der Drosselklappe angeordnete Mischrohrdüse zur Einfüh- rung von Zusatzluft in die/ Luftansaugleitung, einen vom strom- auf der Drosselklappe herrschenden Unterdruck gesteuerten Regler für die Zusatzluftzufuhr und eine mit dem Kurbelgehäuse in Verbindung stehende, über den Regler in die Mischrohrdüse führende Zusatzluftzuführleitung gekenn- zeichnet ist.

Während bei der bereits vorgeschlagenen Vorrichtung für vergaserbetriebene Brennkraftmaschinen das in Ver- gaser erzeugte Kraftstoff-Luft-Gemisch über die durch die Mischrohrdüse zugeführte Zusatzluft entsprechend aufbereitet bzw. umgelenkt wird, geschieht dies bei der erfindungsgemäßen Vorrichtung nur mit der von der Brenn- kraftmaschine angesaugten Luft. Diese Luft wird durch die über die Mischrohrdüse eingeführte Zusatzluft entsprechend aufbereitet bzw. verwirbelt, so daß hierdurch eine Verbesserung des innerhalb der Brennkraftmaschine stattfindenden Verbrennungsvorganges erreicht wird. Wesentlich ist bei der Erfindung, daß über die Mischrohrdüse der in der Luftansaugleitung angesaugten Verbrennungs- luft nicht ausschließlich Zusatzluft beigemischt wird, sondern Zusatzluft in Verbindung mit der Abluft des Kurbelgehäuses, bei der es sich überwiegend um ein Luft-Öl- Gemisch in Form von Öldämpfen bzw. eines Ölnebels handelt. Ein großer Teil dieses Ölnebels gelangt, ggf. nach Anreicherung mit Zusatzluft, zur Mischrohrdüse und wird dort vom angesaugten Luftstrom mitgerissen, wobei eine Verwirbelung desselben eintritt und ein den Verbrennungs- verlauf günstig beeinflussendes Luft-Öl-Gemisch gebildet wird.

Die Mischrohrdüse ist zweckmäßigerweise in einem Rechteckflansch angeordnet, der mit einer der Durchtrittsöffnung des Drosselteiles der Luftansaugleitung entsprechenden Durchtrittsöffnung versehen und zwischen das Drosselteil und den eigentlichen Ansaugstutzen montierbar ist. Diese Ausführungsform der Erfindung ist insbesondere für die Nachrüstung von bereits im Betrieb befindlichen Brennkraftmaschinen (Kraftfahrzeugen) geeignet. Dabei wird der Flansch zwischen das Drosselteil und den Luftansaugstutzen montiert. Der Unterdruckanschluß des Reglers wird hierbei über ein T-Stück an die zum Zündverteiler führende Frühzündverstelleitung angeschlossen, so daß bei der Umrüstung relativ wenig Teile verändert bzw. ausgetauscht werden müssen.

Wie bereits erwähnt, kann sich die der von der Brennkraftmaschine angesaugten Luft beizumischende Zusatzluft aus der mit atmosphärischer Luft angereicherten Abluft des Kurbelgehäuses oder ausschließlich aus der Kurbelgehäuseabluft zusammensetzen. Für die gegenwärtig im Gebrauch befindlichen Kraftfahrzeugmotoren mit Benzineinspritzung sind beide Ausführungsformen möglich, wobei eine entsprechende Optimierung zu einer genauen Festlegung des Verhältnisses zwischen Kurbelgehäuseabluft und Zusatzluft führt.

Wesentlich ist, daß durch die Mischrohrdüse eine möglichst gute Verwirbelung des von der Brennkraftmaschine angesaugten Luftstromes erreicht wird. Um dies zu erreichen, weist die sich durch die Luftansaugleitung erstreckende Mischrohrdüse Luftaustrittsschlitze auf, die auf dachförmig angeordneten Schrägflächen der Mischrohrdüse angeordnet sind. Die Schnittlinie der beiden Schrägflächen verläuft hierbei durch die Vertikalebene der Luftansaugleitung. In der Draufsicht sind die Schlitze vorzugsweise unter einem stumpfen Winkel zur Mischrohrdüsenachse angeordnet, wobei die Schlitze der einen Schlitzgruppe mit den Schlitzen der anderen Schlitzgruppe einen Winkel bilden. Dabei sind die jeweiligen Schlitzgruppen entgegengesetzt zur Mischrohrdüsenachse angestellt.

Wenn der Querschnitt der Luftansaugleitung besonders groß ist, schlägt die Erfindung vor, die Mischrohrdüse im Bereich des Luftansaugleitungsquerschnittes unter Bildung von zwei Kammern durch eine Trennwand zu unterteilen und jeder Kammer eine Schlitzgruppe sowie eine Zusatzluftzuführleitung zuzuordnen. Hierdurch wird sichergestellt, daß auch der Teil des Querschnittsbereiches der Luftansaugleitung, der an vom Regler gesehen hinteren Ende der Mischrohrdüse liegt, Zusatzluft in einer ausreichend großen Menge und mit einer ausreichend hohen Geschwindigkeit erhält, so daß eine gleichmäßige Verwirbelung über den Gesamtquerschnitt der Luftansaugleitung sichergestellt wird. Bei kleineren Querschnitten ist eine derartige Unterteilung in der Regel nicht erforderlich.

Der Verwirbelungseffekt wird dadurch weiter begünstigt, daß die Mischrohrdüse in der Draufsicht mit der Achse der Drosselklappe einen Winkel bildet. Dieser Winkel beträgt vorzugsweise 20°. Die Schrägflächen der Mischrohrdüse, auf denen die Schlitzgruppen angeordnet sind, sind vorzugsweise unter einen Winkel von 45° zu einer durch die Achse der Mischrohrdüse gelegten Horizontalebene angeordnet. Dieser Winkel hat in bezug auf den

Verwirbelungseffekt zu den besten Ergebnissen geführt.

In die zur Mischrohrdüse führende Zusatzluftzuführleitung bzw. in die beiden entsprechenden Leitungen ist eine Drossel eingebaut, um hierdurch eine weitere Geschwindigkeitserhöhung zu erzielen. Die Drossel kann die Form einer Düse aufweisen. Wesentlich ist jedenfalls, daß durch eine Querschnittsverringerung des Zuführkanales eine entsprechende Geschwindigkeitserhöhung erreicht wird.

Der erfindungsgemäß vorgesehene Regler steuert die Zufuhr der Zusatzluft in Abhängigkeit von dem stromauf der Drosselklappe herrschenden Unterdruck. Dies wird über ein membrangesteuertes Sperrglied bewerkstelligt, das die zur Mischrohrdüse führende Zusatzluftleitung frei gibt bzw. sperrt. Für das Sperrglied ist ein verstellbarer Anschlag vorgesehen, über den die maximale Schließstellung des Sperrgliedes einstellbar ist. Hierdurch kann selbst dann immer etwas Zusatzluft der von der Brennkraftmaschine angesaugten Luft beigemischt werden, wenn die Drosselklappe nahezu geschlossen (Leerlauf) ist. Eine Feder spannt das Sperrglied in die Schließstellung vor. Die Membran ist in einer Steuerkammer angeordnet und unterteilt diese in zwei Kammern, von denen in eine der Unterdruckanschluß und ein Zusatzluftanschluß münden. Über den Zusatzluftanschluß kann der in der Kammer herrschende Unterdruck reduziert werden, wodurch eine weitere Einstellmöglichkeit in Abstimmung mit dem jeweiligen Typ der Brennkraftmaschine gegeben ist.

Bei der Ausführungsform mit der/ zweigeteilten Mischrohrdüse

öffnet und schließt das Sperrglied gleichzeitig die beiden zu den jeweiligen Kammern führenden Zusatzluftzuführleitungen. Hierdurch wird eine genau synchrone Funktionsweise erreicht.

Vorzugsweise weisen die Zusatzluftzuführleitungen bzw. die entsprechenden Leitungen oder das Sperrglied Durchlaßquerschnitte auf, die sich von unten nach oben ste - tig erweitern. Hierdurch wird bei einem Öffnen des Sperrgliedes der Durchsatz entsprechend erhöht, wobei insbesondere eine Erweiterung des Durchlaßquerschnit- tes entlang nach innen konvex gekrümmter Kanten vorgeschlagen wird, um eine überproportionale Durchsatzzunahme etwa bis zur Hälfte des Durchlaßquerschnittes sicherzustellen. Natürlich sind auch andere Durchlaßquerschnittsformen möglich, je nach den vorherrschenden Bedingungen.

Die Erfindung wird nachfolgend anhand eines Ausführungs- beispieles in Verbindung mit der Zeichnung im einzelnen erläutert. Es zeigen:

Figur 1    eine schematische Ansicht des Aufbaus der erfindungsgemäß ausgebildeten Vorrichtung;

Figur 2    eine Draufsicht auf den mit der Mischrohrdüse versehenen Flansch;

Figur 3    eine Draufsicht auf sowie einen Querschnitt durch die Mischrohrdüse im demontierten Zustand; und

Figur 4    einen Schnitt durch den Regler.

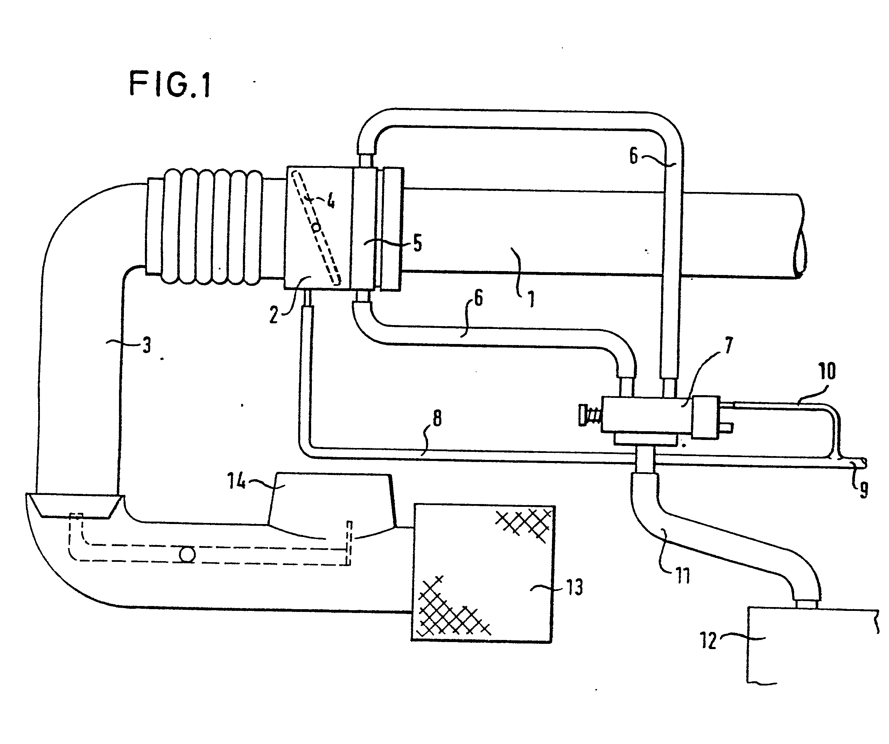

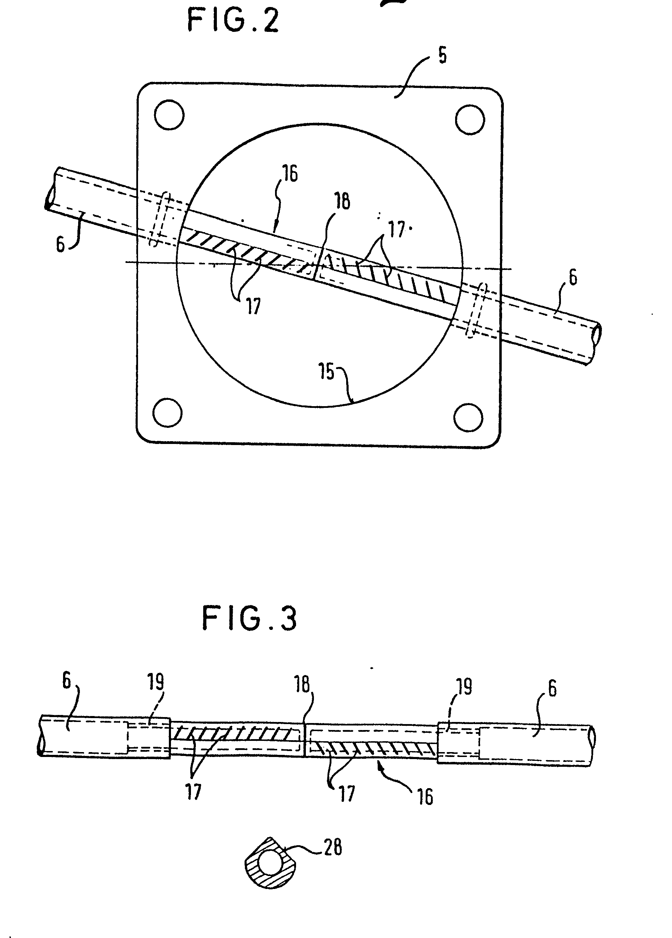

Zuerst wird auf die in Figur 1 gezeigte schematische Gesamtansicht der Vorrichtung zur Reduzierung des Kraftstoffverbrauches und zur Herabsetzung der Abgasschadstoffe bezug genommen. Wie Fig. 1 zu entnehmen ist, ist zwischen den Ansaugstutzen 1 und dem Drosselteil 2 einer mit einem Luftfilter 13 und einem Mengenteiler 14 versehenen Luftansaugleitung eines herkömmlich ausgebildeten, benzinbetriebenen Einspritzermotors ein Flansch 5 eingesetzt, der somit in Strömungsrichtung der vom Motor her angesaugten Luft abstromseitig einer im Drosselteil 2 angeordneten Drosselklappe 4 liegt. In diesem Rechteckflansch 5, der in Fig. 2 genauer dargestellt ist, ist eine Mischrohrdüse 16 angeordnet, über die der durch die Leitung 3 angesaugten Luft Zusatzluft beimischbar ist. Die Mischrohrdüse 16 umfaßt zwei getrennte Kammern, an die jeweils eine Zusatzluftzuführleitung 6 angeschlossen ist. Beide Leitungen 6 münden in einen Regler 7, der die Zusatzluftzufuhr in Abhängigkeit von dem stromauf der Drosselklappe 4 herrschenden Unterdruck regelt. Hierzu ist eine Steuerkammer des Reglers 7 über eine Leitung 10 und ein entsprechendes T-Stück an die bei 9 zum Zündverteiler (nicht gezeigt) führende Frühzündverstelleitung 8 angeschlossen.

Die Zusatzluft wird bei dieser Ausführungsform ausschließlich aus der Abluft eines schematisch dargestellten Kurbelgehäuses 12 des Motors gewonnen, was mit Hilfe einer vom Kurbelgehäuse 12 zum Regler 7 führenden Leitung 11 geschieht. In diese Leitung 11 kann ggf. atmosphärische Zusatzluft eingeführt werden.

Der Aufbau des mit der Mischrohrdüse 16 versehenen Rechteckflansches 5 ist in Fig. 2 dargestellt. Wie man Fig. 2 entnehmen kann, umfaßt der Rechteckflansch 5 vier Befestigungslöcher, über die er montierbar ist, sowie eine mittig angeordnete Durchtrittsöffnung 15, deren Querschnitt an die Durchtrittsöffnung des Drosselteiles 2 genau angepaßt ist. Die Mischrohrdüse 16 ist im Flansch 5 fest angeordnet und erstreckt sich in der hier gezeigten Draufsicht unter einem Winkel von ca. 20° zur Achse der Drosselklappe 4. Im Bereich der Durchtrittsöffnung 15 besitztdie als Rohr ausgebildete Mischrohrdüse Schrägflächen 17, die jeweils einer Kammer der Mischrohrdüse zugeordnet sind, welche über eine Trennwand 18 voneinander getrennt sind. Auf den Schrägflächen, die unter einem Winkel von etwa 45° zur Horizontalen angeordnet sind, wie bei 28 in Fig. 3 gezeigt, befindet sich jeweils eine Schlitzgruppe 17. Die genaue Anordnung dieser Schlitze wird nachfolgend in Verbindung mit Figur 3 erläutert. Die Zusatzluftzuführleitungen 6 sind an die beiden Kammern der Mischrohrdüse angeschlossen.

Fig. 3 zeigt die Ausbildung der Mischrohrdüse in der Draufsicht und im Querschnitt. In der Draufsicht sind die Schlitze der beiden Schlitzgruppen 17 so angeordnet, daß sie mit der Mischrohrdüsenachse einen stumpfen bzw. spitzen Winkel bilden. Ferner sind die Schlitze der einen Schlitzgruppe entgegengesetzt gerichtet wie die Schlitze der anderen Schlitzgruppe. Bei der hier dargestellten Ausführungsform ist/ zwischen der eigentlichen Mischrohrdüse 16 und den jeweiligen Zuführleitungen 6 eine Drossel in Form einer Düse 19 vorgesehen.

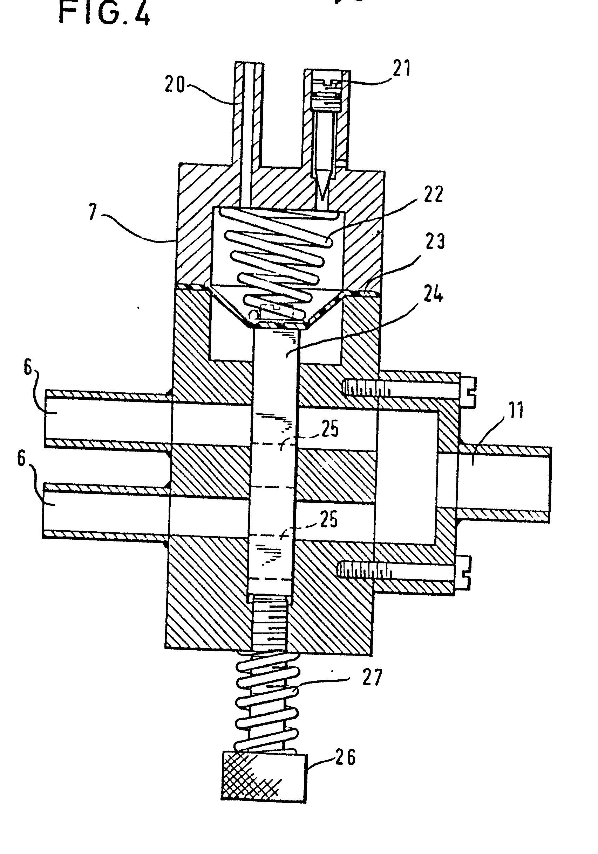

Ein senkrechter Schnitt durch den Regler 7 ist in Fig. 4 gezeigt. In den Regler mündet die vom Kurbelgehäuse 12 kommende Abluftleitung 11 ein, die sich dort in die beiden zu den Kammern der Mischrohrdüse führenden Zusatzluftzuführleitungen 6 verzweigt. Der Regler besitzt ein kolbenförmiges Stellglied 24, das die Durchtritts-

querschnitte der Leitungen 6 steuert. Diese Steuerung geschieht gleichzeitig, so daß die beiden Kammern der Mischrohrdüse synchron mit Zusatzluft beaufschlagt werden. Das obere Ende des Sperrgliedes 24 mündet in eine Steuerkammer, in der eine Feder 22 angeordnet ist, die das Sperrglied in die Schließstellung vorspannt. Das Sperrglied ist mit einer Membran 23 verbunden, die die Steuerkammer in zwei einzelne Kammern unterteilt. Die in der Figur obere Kammer ist mit einem an die Leitung 10 angeschlossenen Unterdruckanschluß 20 versehen, über die die Kammer mit dem stromauf der Drossel 4 herrschenden Unterdruck beaufschlagt wird. Ferner kann über eine Regelschraube 21 einer Bypassregelung Zusatzluft in gesteuerter Weise in die Kammer eingeführt werden.

Eine mit einer Feder 27 versehene, verstellbare Anschlagschraube 26 begrenzt die Schließstellung des Sperrgliedes 24. Hierdurch kann die unterste Stellung des Sperrgliedes 24 variiert werden.

Die vorstehend beschriebene Vorrichtung funktioniert folgendermaßen:

Beim Öffnen der Drosselklappe 4 und Aufbau eines Unterdrucks stromauf derselben wird das in seine Schließstellung vorgespannte Sperrglied 24 nach oben gezogen, wodurch die Durchtrittsquerschnitte der beiden Leitungen 6 freigegeben werden. Somit kann Zusatzluft über die Leitung 11 und die Leitungen 6 in die Mischrohrdüse 16 eingeführt werden und dort durch die vom angesaugten Hauptluftstrom erzeugte Unterdruckwirkung aus den Schlitzen der beiden Schlitzgruppen 17 austreten. Durch die spezielle Anordnung und Ausbildung der Schlitze wird hierbei eine Verwirbelung des den Verbrennungsräumen zugeführten Luftstromes erreicht.

Wenn die Drosselklappe 4 wieder schließt, nimmt auch der in der Steuerkammer des Reglers 7 herrschende Unterdruck ab, so daß sich das Sperrglied 24 wieder seiner Schließstellung nähert und dadurch die Druchtrittsquerschnitte der Leitungen 6 sperrt. Die Anschlagschraube 26 ist jedoch so eingestellt, daß das Sperrglied 24 in seiner untersten Stellung über die in ihm angeordneten Durchtrittsöffnungen 25 immer noch eine geringe Menge an Zusatzluft durch die Leitungen 6 strömen läßt, so daß beispielsweise auch im Leerlauf immer ein gewisser Verwirbelungseffekt der in die Verbrennungsräume eingeführten Luft erzielt wird.

Über die Reglerschraube 21 kann der in der einen Kammer der Reglersteuerkammer aufgebaute Unterdruck durch Luftzufuhr entsprechend abgeschwächt werden.

Patentansprüche

1. Vorrichtung zur Reduzierung des Kraftstoffverbrauchs und zur Herabsetzung der Abgasschadstoffe bei mit Einspritzvorrichtungen versehenen Brennkraftmaschinen, gekennzeichnet durch eine in der Luftansaugleitung (3) der Brennkraftmaschine stromab der Drosselklappe (4) angeordnete Mischrohrdüse (16) zur Einführung von Zusatzluft in die Luftansaugleitung, einen vom stromauf der Drosselklappe (4) herrschenden Unterdruck gesteuerten Regler (7) für die Zusatzluftzufuhr und eine mit dem Kurbelgehäuse (12) in Verbindung stehende, über den Regler (7) in die Mischrohrdüse (16) führende Zusatzluftzuführleitung (11, 6).

2. Vorrichtung nach Anspruch 1, dadurch gekennzeichnet, daß sich die Mischrohrdüse (16) quer durch die Luftansaugleitung (3) erstreckt und im Bereich des Leitungsquerschnittes Luftaustrittsschlitze aufweist.

3. Vorrichtung nach Anspruchg 1 oder 2, dadurch gekennzeichnet, daß die Mischrohrdüse (16) im Bereich des Luftansaugleitungsquerschnittes zwei entgegengesetzt geneigte Schrägflächen (28) aufweist, die jeweils mit einer Gruppe (17) von Schlitzen versehen sind.

4. Vorrichtung nach Anspruch 2 oder 3, dadurch gekennzeichnet, daß in der Draufsicht die Schlitze unter einem stumpfen bzw. spitzen Winkel zu Mischrohrdüsenachse angeordnet sind und die Schlitze der einen

Schlitzgruppe mit den Schlitzen der anderen Schlitzgruppe einen Winkel bilden.

5. Vorrichtung nach einem der vorangehenden Ansprüche,
dadurch gekennzeichnet, daß in der Draufsicht die Mischrohrdüse (16) mit der Achse der Drosselklappe (4) einen
Winkel von insbesondere 20° bildet.

6. Vorrichtung nach einem der Ansprüche 3 bis 5, dadurch
gekennzeichnet, daß die Mischrohrdüse (16) im Bereich
des Luftansaugleitungsquerschnittes unter Bildung von
zwei Kammern durch eine Trennwand (18) unterteilt ist
und daß jeder Kammer eine Schlitzgruppe (17) sowie
eine Zusatzluftzuführleitung (6) zugeordnet ist.

7. Vorrichtung nach einer der vorangehenden Ansprüche,
dadurch gekennzeichnet, daß in der Zusatzluftzuführleitung für die Mischrohrdüse (16) bzw. den entsprechenden
beiden Zuführleitungen (6) eine Drossel (19) angeordnet ist.

8. Vorrichtung nach einem der vorangehenden Ansprüche,
dadurch gekennzeichnet, daß der Regler (7) ein vorgespanntes, membrangesteuertes Sperrglied (24) aufweist,
das die zur Mischrohrdüse (16) führende Zusatzluftzuführleitung (6) sperrt bzw. öffnet, daß ein verstellbarer Anschlag (26) für das Sperrglied vorgesehen ist
und daß die Membran (23) in einer Steuerkammer angeordnet ist, in deren eine Kammer der Unterdruckanschluß
(20) von der Luftansaugleitung (3) und ein Bypassanschluß zur Einführung von unter atmosphärischem Druck
stehender Luft münden.

9. Vorrichtung nach Anspruch 6 und 8, dadurch gekennzeichnet, daß die beiden Zusatzluftzuführleitungen (6)
für die Kammern durch ein gemeinsames Sperrglied (24) in Regler (7) steuerbar sind.

10. Vorrichtung nach Anspruch 8 oder 9, dadurch gekennzeichnet, daß die Zusatzluftzuführleitung bzw. -leitungen
(6) und/oder das Sperrglied (24) Durchlaßquerschnitte
aufweisen, die sich von unten nach oben stetig, insbesondere entlang konvex gekrümmter Kanten, erweitern.

11. Vorrichtung nach einem der vorangehenden Ansprüche,
dadurch gekennzeichnet, daß die Zusatzluftzuführleitung
ausschließlich die Abluftleitung (11) des Kurbelgehäuses (12) ist.

12. Vorrichtung nach einem der vorangehenden Ansprüche,
dadurch gekennzeichnet, daß der Unterdruckanschluß (20)
des Reglers (7) über ein T-Stück an die zum Zündverteiler führende Frühzündverstelleitung (8) angeschlossen
ist.

13. Vorrichtung nach einem der vorangehenden Ansprüche,
dadurch gekennzeichnet, daß die Mischrohrdüse (16) in
einem Rechteckflansch (5) angeordnet ist, der mit einer
der Durchtrittsöffnung des Drosselteiles (2) der Luftansaugleitung (3) entsprechenden Durchtrittsöffnung
(15) versehen und zwischen das Drosselteil und den eigentlichen Ansaugstutzen (1) montierbar ist.

14. Vorrichtung nach Anspruch 8, dadurch gekennzeichnet,
daß der anderen Kammer der Reglersteuerkammer eine Belüftungsbohrung zugeordnet ist.

FIG.1

1/3

0180918

FIG.2

FIG.3

0180918

FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | DE-A-2 033 143 (NISSAN) <br> * Seite 10, Zeile 11 - Seite 11, Zeile 5; Seite 8, Zeile 23 - Seite 9, Zeile 11; Abbildungen 4,6 * | 1 | F 02 M 23/08 <br> F 02 M 25/06 <br> F 02 M 23/00 |
| A |  | 8,11 | |
| | --- | | |
| Y | US-A-3 973 534 (AMOS) <br> * Spalte 2, Zeilen 23-54; Abbildung 1 * | 1 | |
| A |  | 11 | |
| | --- | | |
| P,A | EP-A-0 149 047 (POMMER) <br><br> * Seite 5, Zeile 11 - Seite 6, Zeile 4; Seite 8, Zeilen 6-18,26-30; Abbildungen 1-5,9-13 * | 1-4,7, 8,11, 12,14 | RECHERCHIERTE SACHGEBIETE (Int Cl 4) <br><br> F 02 M |
| | ----- | | |

Der vorliegende Recherchenbericht wurde für alle Patentansprüche erstellt

| Recherchenort <br> DEN HAAG | Abschlußdatum der Recherche <br> 06-02-1986 | Prüfer <br> LEFEBVRE L.J.F. |
|---|---|---|